# EUROPEAN PATENT APPLICATION

(11) **EP 1 764 519 A1**
(43) Date of publication of application: **21.03.2007**
(21) Application number: 05020476.7
(22) Date of filing: 20.09.2005
(51) Int. Cl.: F16B 25/10

(54) **Screw with multiple cutting ridges in end section**

(71) Applicant: Taiwan Shan Yin International Co., Ltd., Cianjhen District Kao hsiung 806 (TW)
(72) Inventor: Su, Guo-Cai, Cianjhen District, Kaohsiung City 806 (TW)
(74) Representative: Viering, Jentschura & Partner

(57) **Abstract**

A screw (2) comprising:
a head (21) and a shank (22) connected to the head (21), the shank (22) having a thread (23) defined in an outer periphery thereof and a tapered end section (223) which is connected to a distal end of the shank (22), at least two grooves (224) defined in the end section so as to form at least two cutting units (225), each cutting unit (225) having a cutting edge (226) and an extension portion (227) which is connected with the cutting edge (226), a cutting ridge (228) extending from each of the at least two cutting units (225) and an outer periphery of each of the cutting ridges (228) intersecting a circle whose diameter is composed of the cutting edges (226) of the at least two cutting units (225).
The screw as claimed in claim 1, wherein each of the two cutting units has at least one rib (424) which includes a cutting crest (425).
The screw as claimed in claim 1, wherein the end section includes a flat surface (524) on which at least one elongate flange (525) including a crest extends (526).
The screw as claimed in claim 3, wherein an angle clamped between an axis of the shank and the at least one elongate flange.

## Description

### FIELD OF THE INVENTION

The present invention relates to a screw with multiple cutting ridges defined in the end section to improve the efficiency of the screw.

### BACKGROUND OF THE INVENTION

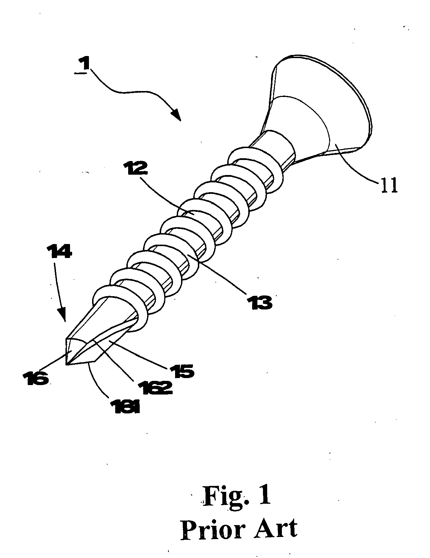

A conventional screw 1 is disclosed in Fig. 1 and generally includes a head 11 and a shank 12 which is connected to the head 11. The shank 12 includes a thread 13 extends from the shank 12 and an end section 14 which is a cone-shaped section with a tip and two grooves 15 (only one is shown) are defined in the end section 14 so as to form two cutting units 16. Each cutting unit 16 includes a cutting edge 161 and an extension section 162 which extends to the shank 12. When screwing the screw 1 into an object by using a tool to rotate the head 11 of the screw 1, the end section 14 penetrates into the object and the cutting edges 161 cut the fiber of the object to assist the shank 12 to merge into the object.

However, it is noted that the end section 14 is formed by way of pressing by two press dies so that the end section 14 is formed with a little bit of flat so that the two cutting edges 161 are located on two ends of a diameter of the end section 14. The two cutting edges 161 bear all the torque when screwing into the object, so that the resistance is so large and the user has to use a lot of torque to rotate the screw 1.

Besides, The cutting edges 161 tend to be too thin by the way of pressing and are easily to be broken or damaged. If the cutting edges 161 are made to be thick which might be too dull to cut the fibers of the object. In other words, the precision of the dies is very important and the adjustment when installing the dies is time-consuming.

The present invention intends to provide a screw with multiple cutting ridges defined in the end section which is effort-saving and able to cut fibers of the object effectively.

### SUMMARY OF THE INVENTION

The present invention relates to a screw that comprises a head and a shank Said shank includes a thread and a tapered end section. At least two grooves are defined in the end section so as to form at least two cutting units, and each cutting unit has a cutting edge and an extension portion. A cutting ridge extends from each of the at least two cutting units and an outer periphery of each of the cutting ridges intersects a circle whose diameter is composed of the cutting edges of the at least two cutting cutis.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a conventional screw;
Fig. 2 is the screw of the present invention;
Fig. 3 is an enlarged view to show the grooves in the end section of the screw of the present invention;
Fig. 4 is an end view to show the end section penetrates into an object;
Fig. 5 is a second embodiment of the screw of the present invention;
Fig. 6 is an enlarged view to show the ribs in the end section of the screw in Fig. 5;
Fig. 7 shows a third embodiment of the screw of the present invention;
Fig. 8 shows a fourth embodiment of the screw of the present invention, and
Fig. 9 is an end view to show the end section of the screw in Fig. 7 or Fig.
8 penetrates into an object.

### DETAILED DESCRIPTION OF THE PREFERRED EMBODIMENT

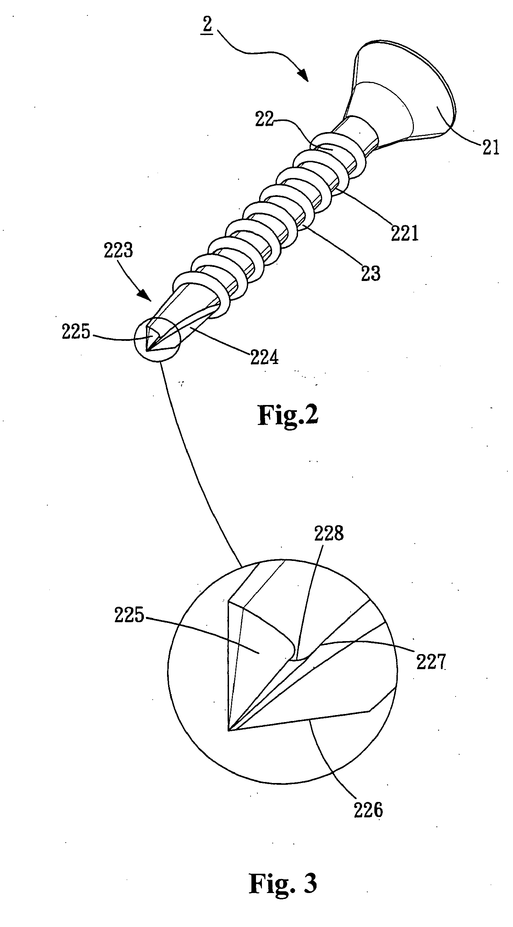

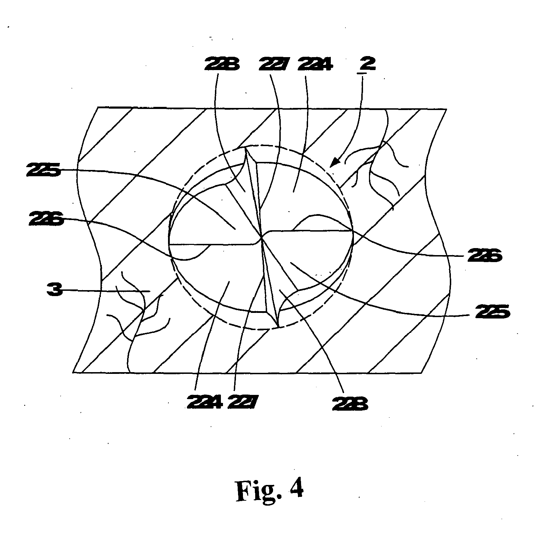

Referring to Figs. 2 to 4, the screw 2 of the present invention comprises a head 21 and a shank 22 connected to the head 21. The shank 22 has a thread 23defined in an outer periphery thereof and a tapered end section 223 which is connected to a distal end of the shank 22. Two grooves 224 (only one is shown) are defined in the end section 223 so as to form two cutting units 225, and each cutting unit 225 has a cutting edge 226 and an extension portion 227 which is connected with the cutting edge 226. A cutting ridge 228 extends from each of the two cutting units 225 and an outer periphery of each of the cutting ridges 228 intersects a circle whose diameter is composed of the cutting edges 226 of the two cutting units 225 as shown in Fig. 4. When rotating the screw 2 into an object 3, the cutting edges 226 and the cutting ridges 228 of the end section 223 cut the fibers of the object 3 so that the resistance from the object 3 is shared by the cutting edges 226 and the cutting ridges 228. This special arrangement ensures that the cutting edges 226 and the cutting ridges 228 are not damaged or even broken by the resistance, and the users use less effort to send the screw 2 into the object 3.

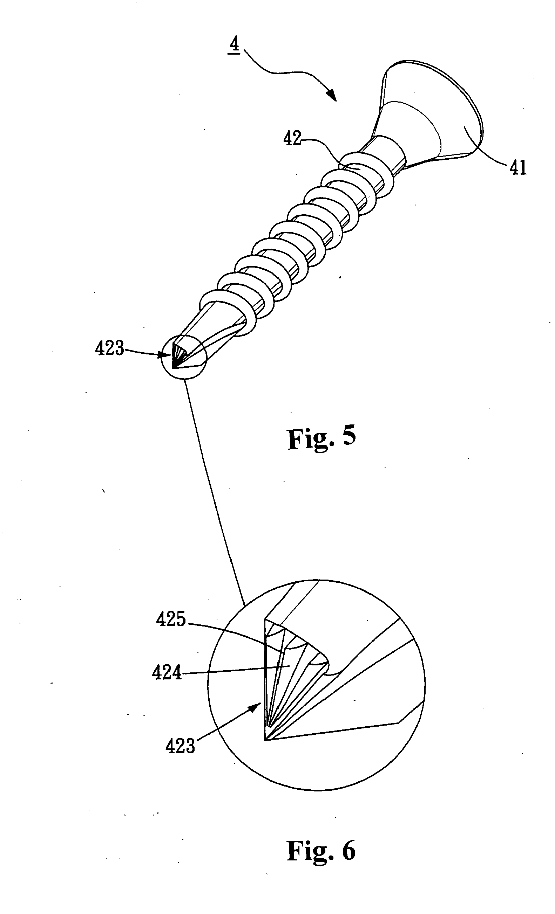

Figs. 5 and 6 show a second embodiment of the screw 4 which includes a head 41, a shank 42 connected to the head 41, a thread on the shank 42 and an end section . Two grooves are defined in the end section which form two cutting units 423 and at least one rib 424 is defined in each of the cutting units 423 and each rib 424 has a cutting crest 425 which effectively cut the fiber of the object.

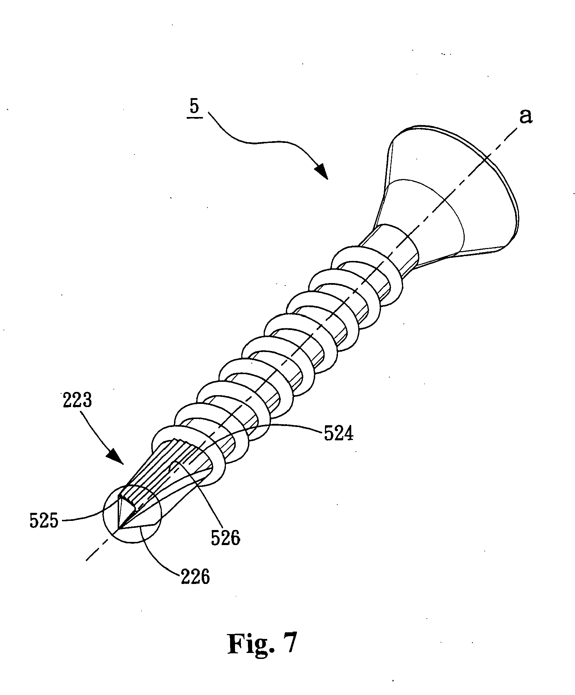

Fig. 7 show a third embodiment of the screw 5 which includes a head, a shank connected to the head, a thread on the shank and an end section 223. The end section 223 includes a flat surface 524 on which a plurality of elongate flange 525 extend and are in parallel to the axis "a" of the shank. Each of the elongate flanges 525 includes a cutting crest 526.

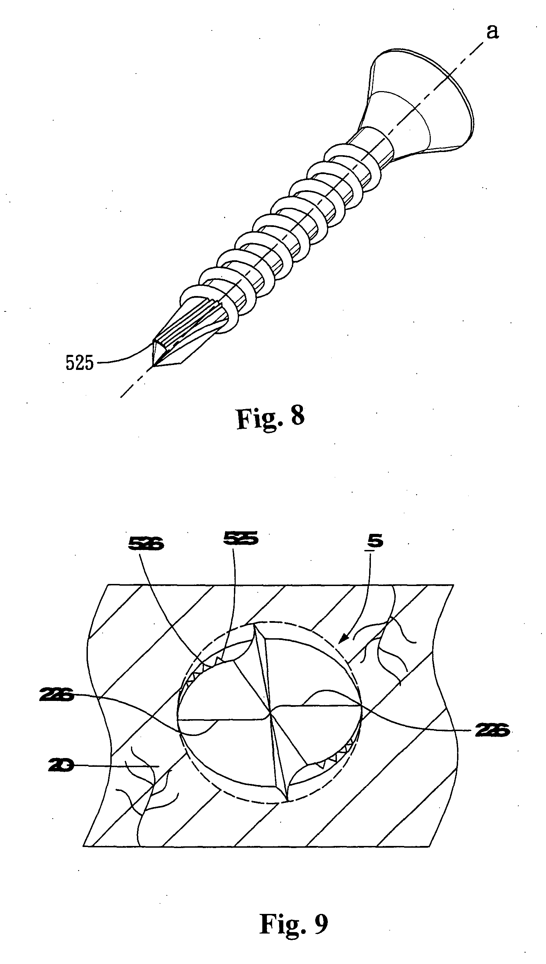

Figs. 8 and 9 show a fourth embodiment of the screw which is the same as the screw 5 in Fig. 7, except that an angle is clamped between the axis "a" of the shank 12 and each of the elongate flanges 525. The resistance from the object during screwing is shared by the cutting crest 526 of the elongate flanges 525 so that the screw 5 can be quickly merged into the object and each of the cutting crests 526 is applied by less torque.

The screw 2, 4, 5 of the present invention can be easily screwed into objects by the cutting ridges 228, the ribs 424 or the elongate flanges 525 which share the torque so that they are not damaged by the resistance. The screw 2, 4, 5 do not need to rely on the sharpness of the cutting edges 226 due to the existence of the cutting ridges 228, the ribs 424 or the elongate flanges 525. In other words, the screws are effective even if the dies are not precise as desired.

As indicated above, the invention has the following advantages:
1. Because the cutting edges and cutting ridges cut the fiber of object together, the screwing becomes effort-saving and efficient. The cutting edges and cutting ridges share the torque to reduce the resistance.
2. Because the cutting ridges help cut the fiber of object, there is no great influence whether the cutting edges are shape or not.
3. Because the ribs help cut the fiber of object and share the torque, the cutting ridges become less possible to broke and damage.

While we have shown and described the embodiment in accordance with the present invention, it should be clear to those skilled in the art that further embodiments may be made without departing from the scope of the present invention.

## Claims

1. A screw comprising:
a head and a shank connected to the head, the shank having a thread defined in an outer periphery thereof and a tapered end section which is connected to a distal end of the shank, at least two grooves defined in the end section so as to form at least two cutting units, each cutting unit having a cutting edge and an extension portion which is connected with the cutting edge, a cutting ridge extending from each of the at least two cutting units and an outer periphery of each of the cutting ridges intersecting a circle whose diameter is composed of the cutting edges of the at least two cutting cutis.

2. The screw as claimed in claim 1, wherein each of the two cutting units has at least one rib which includes a cutting crest.

3. The screw as claimed in claim 1, wherein the end section includes a flat surface on which at least one elongate flange including a crest extends

4. The screw as claimed in claim 3, wherein an angle clamped between an axis of the shank and the at least one elongate flange.
